# DEMANDE DE BREVET EUROPEEN

(11) **EP 0 990 470 A1**
(43) Date de publication de la demande: **05.04.2000**
(21) Numéro de dépôt: 99402367.9
(22) Date de dépôt: 28.09.1999
(51) Int. Cl.: B21B 39/00, B22D 11/128, C03B 13/16, C21D 9/00, C21D 1/42, F27D 3/02

(54) **Rouleau destiné à une installation pour le chauffage global ou localisé au défilé de produits métallurgiques par des dispositifs de chauffages par induction de forte puissance.**

(30) Priorité: 30.09.1998 FR 9812252
(71) Demandeur: Celes, F-68610 Lautenbach (FR)
(72) Inventeur: Couffet, Claude, 93100 Montreuil (FR); Hellegouarc'h, Jean, 94170 Le Perreux (FR); Prost, Gérard, 94260 Fresnes (FR); Uring, Jean Camille, 68000 Colmar (FR)
(74) Mandataire: Armengaud Ainé, Alain

(57) **Abrégé**

Dispositif destiné à une installation pour le chauffage au défilé de rives de produits métallurgiques, par des dispositifs de chauffage par induction (2) de forte puissance, comportant au moins un rouleau (1) support du produit sidérurgique, celui-ci étant positionné au voisinage des dispositifs de chauffage par induction (2), caractérisé en ce que le rouleau (1) comporte une âme centrale (4, 7, 9) métallique, éventuellement pourvue d'un pluralité d'orifices (5, 8, 8', 10, 10', 16)) en vue de l'établissement de circuits de refroidissement à fluide perdu ou recirculé entre l'axe du rouleau (1) et sa périphérie (14), cette âme centrale étant revêtue sur sa surface externe de moyens (3) évitant l'établissement de courants de circulation initiateurs d'arcs électriques d'extra-rupture entre le produit sidérurgique et la surface du rouleau (1).

## Description

La présente invention est relative à un dispositif destiné à une installation pour le chauffage au défilé de rives de produits métallurgiques, devant subir ultérieurement des déformations à chaud. Ces produits sont notamment des blooms, des billettes ou des brames, qui doivent être chauffés ou réchauffés avant d'être aplatis et/ou élargis par passages éventuellement successifs entre les rouleaux d'un laminoir.

Ainsi, en sortie d'une coulée continue, les produits semi-finis tels que notamment blooms, brames, billettes, sont dirigés vers des trains de laminoirs à chaud, de type dégrossisseurs et finisseurs, au sein desquels ces produits subissent des modifications de leurs dimensions en raison du laminage, en vue d'obtenir des produits finis.

Plus particulièrement, des brames dont les dimensions classiques atteignent 10 m de long, 250 mm d'épaisseur et 1,50 m de large, sont dirigées, avant d'atteindre le premier train de laminoirs dégrossisseurs, vers un four de réchauffage, notamment à gaz ou à fuel, dans lequel la température de ces produits est amenée aux environs de 1200°C.

Or, en sortie de ces fours, ces produits réchauffés sont acheminés, notamment à une vitesse moyenne de 1 m/s, de manière continue grâce à des chemins de rouleaux dont les longueurs peuvent atteindre plusieurs dizaines de mètres, en direction des cages de laminoirs. Lors de ce transport, les brames réchauffées à 1200°C subissent un refroidissement de température interne de la pièce qui est surtout sensible au niveau des rives de celles-ci, les rives étant les bords latéraux dans le sens longitudinal des produits sidérurgiques et notamment des brames.

Il est donc nécessaire, en amont des cages de laminoirs, et particulièrement en amont d'un train de laminoirs dits finisseurs, de compenser l'abaissement de température au niveau des rives, celui-ci pouvant atteindre, en fonction des vitesses de déplacement en continu des produits sidérurgiques et de la distance comprise entre le four de réchauffage et l'entrée du train de laminoirs, une centaine de degrés Celsius.

De façon classique, cet apport calorifique peut être obtenu par un dispositif de chauffage par induction situé en amont du train de laminoirs.

Les dispositifs de chauffage par induction comme ceux décrits dans le brevet français n° 2 692 828 appartenant à la Société demanderesse, sont de type grande puissance au regard des dispositifs de chauffage par induction antérieurs à cette solution. La puissance à injecter peut classiquement atteindre 400 à 800 kW par inducteur.

Lorsque ces dispositifs de chauffage par induction sont positionnés de telle manière à provoquer le réchauffement de la matière au niveau des rives du produit sidérurgique en circulation entre les inducteurs du dispositif, le siège des courants de circulation induits par le champ magnétique variable, est localisé en boucle dans l'épaisseur de la pièce ; la densité de courant induit est très importante au niveau des rives, ce qui provoque l'échauffement recherché.

Lorsque ces produits métallurgiques cheminent en direction des cages de laminoirs, ces produits étant maintenus dans le plan de laminage grâce à des rouleaux et à des moyens de guidage qui les supportent, il se produit dans la zone de réchauffage des rives et au voisinage des dispositifs de chauffage par induction, des arcs électriques d'extra-rupture entre les rouleaux et la face du produit sidérurgique qui est au contact de ceux-ci.

En effet, une partie des courants induits dans le produits sidérurgique est déviée dans les rouleaux, au niveau de leurs génératrices, encadrant l'inducteur.

L'interruption sporadique de ces courants déviés due à la mauvaise qualité du contact, génère des arcs électriques d'extra-rupture au niveau de ces contacts, ceux-ci étant situés aux points d'appui du produit sidérurgique sur la génératrice du rouleau. Ces arcs électriques sont d'autant plus intenses que les courants induits, et donc la puissance injectée, sont importants.

Ces arcs électriques provoquent une altération de la surface du produit sidérurgique qui peuvent même engendrer un arrachement de matière. Ces altérations locales de surface se perpétuent et sont amplifiées lors des laminages ultérieurs et nuisent finalement à la qualité du produit fini.

La présente invention vise donc à pallier ces inconvénients en proposant un dispositif qui évite l'apparition d'arcs électriques d'extra-rupture entre le produit sidérurgique et les rouleaux supportant ledit produit, dans la zone de réchauffage des dispositifs de chauffage par induction, afin d'améliorer la qualité et l'état de surface du produit fini.

On sait que pour éviter les arcs électriques d'extra-rupture entre les deux conducteurs où apparaissent des potentiels électriques différents, il suffit par exemple, de diminuer le courant de circulation dans ces deux conducteurs ou même de le supprimer par une isolation électrique de la surface de l'un d'eux.

A cet effet, le dispositif destiné à une installation pour le chauffage au défilé de rives de produits métallurgiques, par des dispositifs de chauffage par induction de forte puissance, comportant au moins un rouleau support du produit sidérurgique, celui-ci étant positionné au voisinage des dispositifs de chauffage par induction, se caractérise en ce que le rouleau comporte une âme centrale métallique, éventuellement pourvue d'un pluralité d'orifices en vue de l'établissement de circuits de refroidissement à fluide perdu ou recirculé entre l'axe du rouleau et sa périphérie, cette âme centrale étant revêtue sur sa surface externe de moyens évitant l'établissement de courants de circulation initiateurs d'arcs électriques d'extra-rupture entre le produit sidérurgique et la surface du rouleau.

D'autres caractéristiques et avantages de la présente invention ressortiront de la description faite ci-après, en référence aux dessins annexés qui en illustrent un exemple de réalisation dépourvu de tout caractère limitatif. Sur les figures :

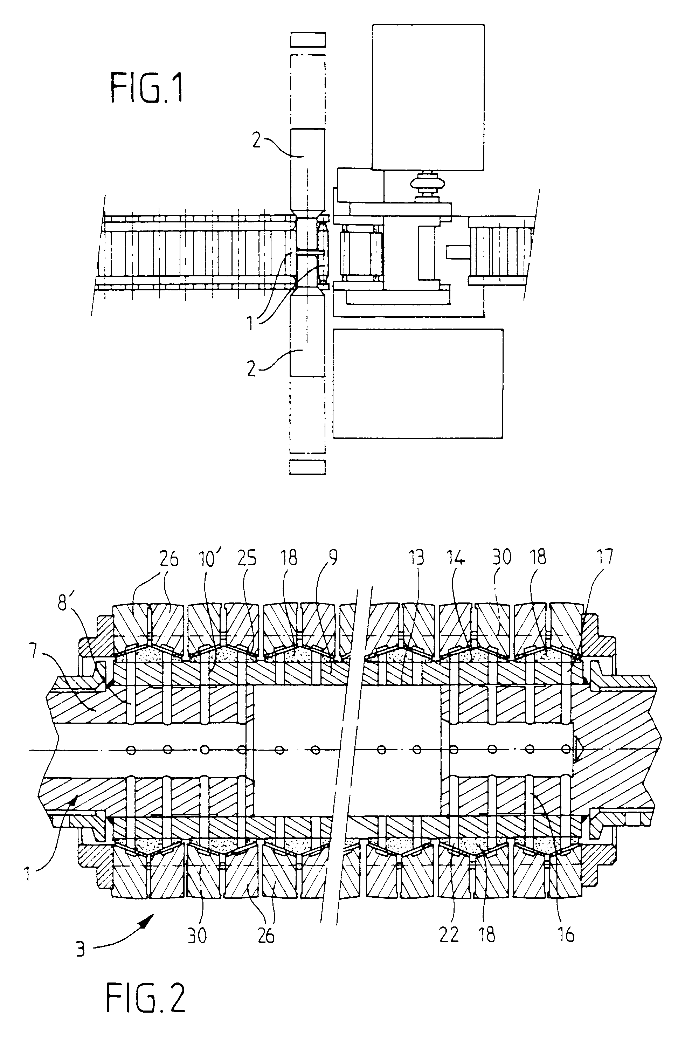

- la figure 1 est une vue de dessus d'une installation comportant les dispositifs, objet de l'invention ;
- la figure 2 est une vue en coupe d'un dispositif, objet de l'invention, comportant un réseau de fluide de refroidissement dit perdu ;

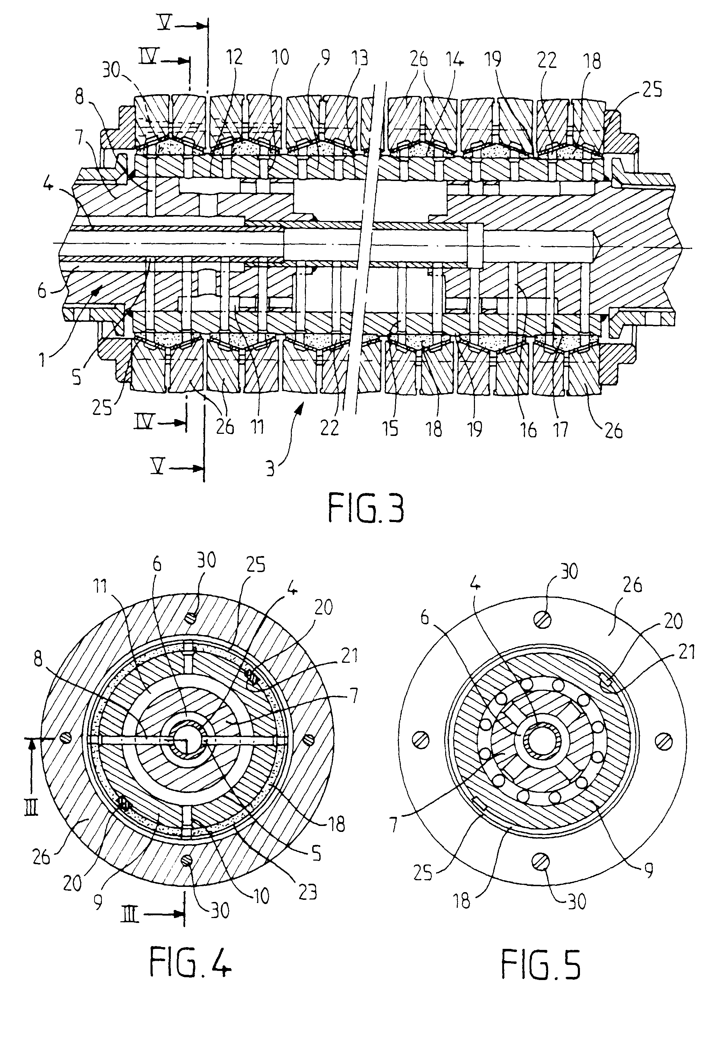

- la figure 3 est une vue en coupe d'un dispositif, objet de l'invention, comportant un réseau de fluide de refroidissement dit recirculé ;
- les figures 4 et 5 sont des vues en coupe et en élévation latérale de la figure 3 ;
- la figure 6 est une vue en coupe, à plus grande échelle, de la surface des dispositifs selon l'invention ;
- la figure 7 est une vue de détail du drain.

Une solution qui consisterait à empêcher l'établissement de circulation de courants dans l'un des conducteurs, tel que notamment à rendre isolant le ou les rouleaux 1 support dans la zone d'action des dispositifs de chauffage par induction 2, ou en interrompant le chemin électrique desdits courants en augmentant la résistance électrique apparente du conducteur à l'aide d'isolants électriques, semble la voie à suivre.

Selon un mode préféré de réalisation, le dispositif de support destiné à être installé dans la zone d'action d'un dispositif de chauffage par induction, et particulièrement de part et d'autre de l'inducteur générant le champ magnétique variable, comporte un rouleau 1.

Ce rouleau 1 qui doit être au contact du produit sidérurgique circulant au défilé, comporte des moyens 3 permettant d'isoler électriquement la partie centrale du rouleau 1 par rapport au produit sidérurgique reposant sur sa périphérie.

Selon un premier mode de réalisation du rouleau 1 objet de l'invention, les moyens 3 permettant d'isoler ou d'empêcher l'établissement de circulation de courants sont réalisés à partir d'un premier arbre 4 formé par un tube, notamment de section droite circulaire, dans lequel peut circuler un fluide de refroidissement (eau, huile etc...). Cet arbre 4 est pourvu d'une pluralité de perçages 5 radiaux uniformément répartis sur la longueur dudit tube 4 qui débouchent dans un espace annulaire 6 formé entre ce premier tube 4 et un deuxième tube 7 concentrique au précédent et qui comporte également une pluralité de seconds orifices 8 radiaux en communication avec les précédents.

Autour de ce second tube 7 est monté un troisième tube 9 concentrique aux tubes 4 et 7, qui dispose d'une pluralité de troisièmes 10 orifices communiquant avec un espace annulaire 11 formé par la paroi externe 12 du deuxième tube 7 et la paroi interne 13 du troisième tube 9.

En fonction de la position relative radiale entre les orifices 5, 8 et 10 vis-à-vis des espaces annulaires 6 et 11 concentriques au premier tube 4, on réalise des réseaux.

Dans un premier mode de réalisation, le rouleau 1 objet de l'invention comporte deux réseaux distincts qui permettent d'établir une circulation recyclée de fluide.

Ce fluide est préférentiellement un fluide de refroidissement tel que notamment de l'eau, de l'huile, ou une émulsion.

Ainsi, le fluide est amené par un dispositif de joints tournants connu en soi dans l'âme du premier tube 4.

Lorsque les tubes 4, 7 et 9 sont placés dans une position angulaire telle que les orifices radiaux 5, 8 et 10 des différents tubes 4, 7 et 9 communiquent entre eux, le fluide de refroidissement chemine directement vers la paroi externe 14 du troisième tube 9 de manière à conformer un premier réseau.

Afin d'augmenter la rigidité de l'ensemble et l'étanchéité entre les tubes 4, 7 et 9, on prévoit d'insérer à l'intérieur de l'ensemble des orifices 5, 8 et 10 en regard une chemise 15 formée notamment par un tube en inox.

Dans cette même configuration angulaire, d'autres orifices 8', 10' pratiqués dans le troisième tube 9 et le deuxième tube 7 communiquent dans les deux espaces annulaires 6, 11, de manière à former un deuxième réseau distinct du premier.

Ainsi, du fluide de refroidissement débouchant directement en périphérie de la surface externe 14 du troisième tube 9 est repris par les canalisations du deuxième réseau et réacheminé vers l'espace annulaire 6 formé autour du premier tube 4 de manière à y être recyclé ou recirculé vers le premier réseau d'adduction.

Selon un deuxième mode de réalisation du rouleau objet de l'invention, les tubes 4 et 7 sont confondus et ne forment qu'un seul arbre creux, disposant également d'une pluralité de perçages 16 radiaux qui débouchent grâce à des orifices 17 pratiqués dans un troisième tube 9 concentrique au précédent arbre, afin de ne réaliser qu'un seul réseau d'adduction dit à fluide perdu.

Selon une caractéristique avantageuse de l'invention, les différents orifices 10 et 17 pratiqués au niveau de la paroi externe 14 du tube 9, que ce soit du type premier mode de réalisation ou second mode de réalisation, débouchent au droit d'une pluralité de garnitures 18.

Ces garnitures 18 réalisées dans une matière isolante à l'égard de la conductivité électrique, notamment à base de fibres de verre, enserrent la paroi externe 14 du tube 9 au niveau des orifices 10 et 17 de sortie de fluide de refroidissement.

Ces garnitures 18 évitent ou limitent l'établissement de courants de circulation au sein de l'arbre, elles sont conformées en bagues et s'ajustent sur la paroi externe 14 du tube 9. Leur déplacement latéral est limité de part en part par des épaulements 19 réalisés sur la paroi externe 14 du tube 9 les recevant, et leur immobilisation en rotation est obtenue par l'intermédiaire d'une clavette 20 ou d'un organe similaire en prise à la fois dans des gorges 21 pratiquées dans le tube 9 et dans la garniture 18 d'isolation.

Ces garnitures 18 en coquilles autour de l'arbre disposent également d'orifices 22 qui débouchent en regard de ceux 5, 5', 8, 8', 10, 10', 17 pratiqués dans les tubes 4, 7, 9 formant le rouleau 1, de manière à acheminer le fluide de refroidissement en périphérie de celles-ci.

On prévoit également que les parois externes 23 de ces garnitures 18 présentent des faces en biseau 24 de part et d'autre de leur zone médiane, formant ainsi une bague à double portée conique.

Les parois inclinées 24 de ces garnitures 18 sont revêtues d'un drain 25 préférentiellement réalisé dans un matériau à conductivité importante, de manière à former un pont thermique entre les garnitures 18 et des disques 26 en contact de ce drain 25.

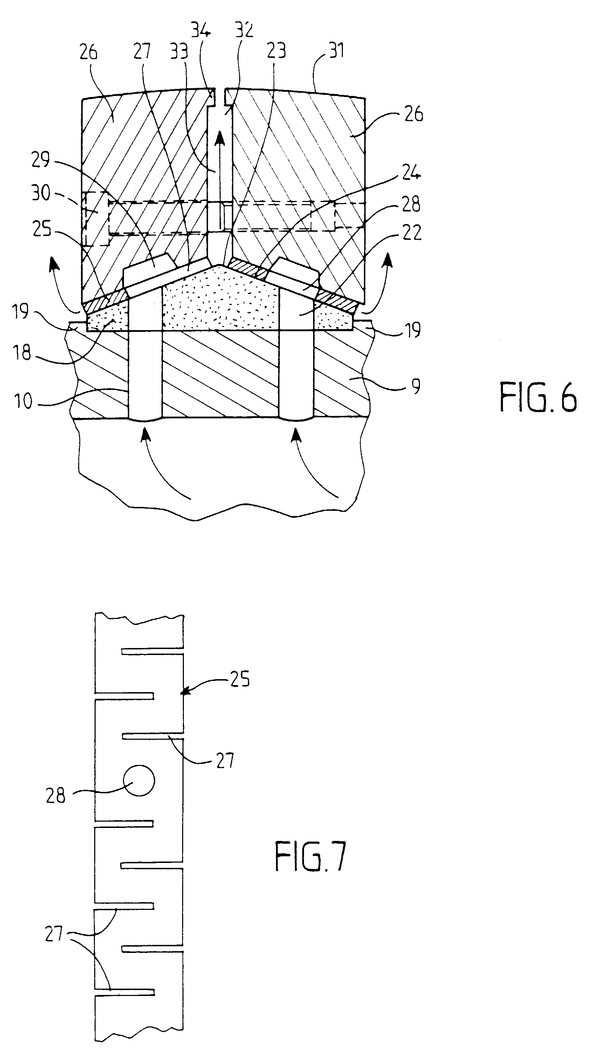

On pourra se référer à la figure 7 qui est une vue partielle développée du drain 25. Ainsi, ce drain est formé d'un feuillard en cuivre qui est pourvu latéralement d'une pluralité de saignées 27 afin de pouvoir s'ajuster aux parois biseautées 24 formées sur les garnitures 18 d'isolation. Ce drain 25 comporte également des trous 28 pour le passage du fluide de refroidissement.

Selon une autre caractéristique, on réalise une pluralité de disques 26 dont l'alésage interne 29 présente une portée conique de manière à s'adapter sur les flancs biseautés 24 des bagues isolantes 18 et du drain 25. Ces disques 26 dont l'épaisseur sera calculée de manière optimale à l'égard des contraintes thermiques et mécaniques, coopèrent au niveau de leur alésage 29 à portée conique avec le drain 25 et sont solidarisés grâce à un montage en vis-à-vis 30 de deux disques dont les parois coniques se rejoignent à leur sommet, ainsi plus les disques sont rapprochés l'un de l'autre, plus le coincement est efficace.

En conséquence, les disques 26 sont pourvus d'un moyen de serrage 30.

Selon une autre caractéristique de l'invention, la paroi externe 31 des disques 26 destinés à être en contact du produit sidérurgique présente un profil convexe dont le sommet de la corde débouche au droit de la zone de jonction 32 de deux disques.

Ainsi, grâce à ce profil, on limite l'étendue des surfaces de contact entre le produit sidérurgique et les disques à une pluralité de points, ce qui empêche l'établissement de courants de circulation à la surface des disques. En effet, si le contact du produit par rapport à la surface périphérique d'un disque s'effectue non pas ponctuellement, mais selon une génératrice, cette génératrice peut couper une ligne de courant de circulation et donc créer un arc électrique d'extra-rupture.

En raison de la conception du système de montage des disques par rapport aux tubes, les disques sont isolés électriquement les uns par rapport aux autres et il y a peu de risques de création d'arcs électriques.

Selon une autre caractéristique, la zone de jonction 32 entre les deux disques délimite un espace formant canal pour l'évacuation du fluide de refroidissement, étant entendu que le fluide ne s'échappe par ce canal 33 que lorsque l'on utilise un rouleau à fluide perdu.

L'extrémité du canal 33 située sensiblement perpendiculairement au profil convexe pratiqué sur les disques 26, comporte une restriction de diamètre formée par deux petits épaulements 34 rapportés sur chacun des flancs des disques.

Cette restriction de diamètre permet de générer un dispositif permettant de couper le rayonnement provenant du produit en circulation qui est à une température voisine de 1200°C.

Selon un autre mode de réalisation d'un rouleau 1, objet de l'invention, celui-ci comporte une âme réalisée dans un matériau métallique, similaire à la partie centrale du rouleau selon le premier mode de réalisation (à fluide perdu ou à fluide recirculé), cette partie centrale étant revêtue, grâce à un traitement de surface, d'une couche de matière isolante à l'égard du passage des courants de circulation.

Selon un premier exemple, ce traitement de surface peut être notamment un revêtement de céramique.

Selon un autre exemple, ce traitement de surface peut être un revêtement minéral, ou tout autre type de revêtement, électriquement isolant, et présentant des propriétés de résistance mécanique et de tenue à la température, requises dans ce type d'application.

L'invention telle que décrite précédemment offre de multiples avantages car elle permet d'utiliser des installations de réchauffage à l'aide de dispositifs par induction de très forte puissance injectée, qui ont des rendements supérieurs par rapport aux dispositifs de réchauffage traditionnels à gaz ou au fuel, mais qui ont l'inconvénient, compte tenu des densités de courants induits atteintes de générer des arcs électriques d'extra-rupture qu'il convient de diminuer voire de supprimer afin d'obtenir un produit fini présentant un état de surface optimal. Ce type de rouleau est particulièrement destiné à une installation pour le chauffage global ou localisé au défilé de produits métallurgiques, par des dispositifs de chauffages par induction de forte puissance.

Il demeure bien entendu que la présente invention n'est pas limitée aux exemples de réalisation décrits et représentés ci-dessus, mais qu'elle en englobe toutes les variantes.

## Revendications

1. Dispositif destiné à une installation pour le chauffage au défilé de rives de produits métallurgiques, par des dispositifs de chauffage par induction (2) de forte puissance, comportant au moins un rouleau (1) support du produit sidérurgique, celui-ci étant positionné au voisinage des dispositifs de chauffage par induction (2), caractérisé en ce que le rouleau (1) comporte une âme centrale (4, 7, 9) métallique, éventuellement pourvue d'un pluralité d'orifices (5, 8, 8', 10, 10', 16)) en vue de l'établissement de circuits de refroidissement à fluide perdu ou recirculé entre l'axe du rouleau (1) et sa périphérie (14), cette âme centrale étant revêtue sur sa surface externe de moyens (3) évitant l'établissement de courants de circulation initiateurs d'arcs électriques d'extra-rupture entre le produit sidérurgique et la surface du rouleau (1).

2. Dispositif selon la revendication 1, caractérisé en ce que le moyen (3) évitant l'établissement de courants de circulation est un traitement de surface tel que notamment un revêtement de céramique.

3. Dispositif selon la revendication 1, caractérisé en ce que le moyen (3) évitant l'établissement de courants de circulation est un revêtement minéral.

4. Dispositif selon la revendication 1, caractérisé en ce que le moyen (3) évitant l'établissement de courants de circulation est un revêtement minéral, ou tout autre type de revêtement, électriquement isolant, et présentant des propriétés de résistance mécanique et de tenue à la température, requises dans ce type d'application.

5. Dispositif selon la revendication 1, caractérisé en ce que le moyen (3) évitant l'établissement de courants de circulation est constitué d'une pluralité d'assemblages juxtaposés, composés d'une superposition d'éléments formés d'une garniture (18), d'un drain (25) et de disques (26) coopérant deux à deux.

6. Dispositif selon la revendication 5, caractérisé en ce que la garniture (18) est réalisée dans une matière isolante à l'égard de la conductivité électrique, notamment à base de fibres de verre, et cette garniture enserre la paroi externe (14) du rouleau (1) au niveau des orifices (10, 10') de sortie de fluide de refroidissement.

7. Dispositif selon l'une des revendications 5 ou 6, caractérisé en ce que la garniture (18) est conformée en bague et s'ajuste sur la paroi externe (14) d'un tube (9), son déplacement latéral étant limité de part en part grâce à des épaulements (19) réalisés sur la paroi externe (14) du rouleau (1) la recevant, et son immobilisation en rotation étant obtenue par l'intermédiaire d'une clavette (20) ou d'un organe similaire en prise à la fois dans des gorges (21) pratiquées dans le tube (9) et dans la garniture (18) d'isolation.

8. Dispositif selon l'une quelconque des revendications 5 à 7, caractérisé en ce que les parois externes (23) de la garniture (18) présentent des faces en biseau (24) de part et d'autre de sa zone médiane, formant ainsi une bague à double portée conique.

9. Dispositif selon l'une quelconque des revendications 5 à 8, caractérisé en ce que les parois inclinées (24) de cette garniture (18) sont revêtues d'un drain (25) préférentiellement réalisé dans un matériau à conductivité importante, de manière à former un pont thermique entre la garniture (18) et les disques (26) en contact de ce drain (25).

10. Dispositif selon l'une quelconque des revendications 5 à 9, caractérisé en ce que la paroi externe (31) des disques (26) destinés à être en contact du produit sidérurgique, présente un profil convexe dont le sommet de la corde débouche au droit d'une zone de jonction (32) entre deux disques (26) superposés.

11. Dispositif selon la revendication 10, caractérisé en ce que la zone de jonction (32) entre les deux disques (26) délimite un espace formant canal (33) pour l'évacuation du fluide de refroidissement.

12. Dispositif selon l'une des revendications 10 ou 11, caractérisé en ce que l'extrémité du canal (33) située sensiblement perpendiculairement au profil convexe pratiqué sur les disques (26), comporte une restriction de diamètre formée par deux petits épaulements (34) rapportés sur chacun des flancs des disques (26) , générant un dispositif permettant de couper le rayonnement provenant du produit en circulation.
